# EUROPEAN PATENT APPLICATION

(11) **EP 4 804 153 A1**
(43) Date of publication of application: **09.09.2026**
(21) Application number: 25767471.3
(22) Date of filing: 07.03.2025
(51) Int. Cl.: G07C 9/00

(54) **APPLICATION METHOD FOR DIGITAL KEY, SYSTEM, ELECTRONIC DEVICE AND STORAGE MEDIUM**

(30) Priority: 08.03.2024 CN 202410265571
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: BAO, Wenzhao, Ningbo, Zhejiang 315899 (CN); SHANG, Xin, Ningbo, Zhejiang 315899 (CN)
(74) Representative: Murgitroyd & Company
(86) International application number: PCT/CN2025/081256
(87) International publication number: WO 2025/185731

(57) **Abstract**

Disclosed are a digital key application method, a system, an electronic device, and a storage medium. The method is applied to a terminal and includes: obtaining protocol information of a digital key protocol of a vehicle and key information of a digital key of the terminal (S1); determining a target digital key protocol from a plurality of digital key protocols pre-integrated in a software development kit based on the protocol information of the digital key protocol of the vehicle and device information of the terminal (S2); and interacting with the vehicle based on the target digital key protocol and the key information of the digital key of the terminal (S3). The method allows for better compatibility with various terminal models and vehicle models, thereby improving user experience.

## Description

### CROSS-REFERENCE TO RELATED APPLICATIONS

The present disclosure claims priority to Chinese Patent Application No. 202410265571.1, filed on March 08, 2024, which is incorporated herein by reference in its entirety.

### TECHNICAL FIELD

The present disclosure relates to, but is not limited to, the field of digital key technologies, and in particular, to a digital key application method, a system, an electronic device, and a storage medium.

### BACKGROUND

The digital key has become a necessary option for the vehicle. After a terminal connects to a vehicle through Bluetooth and completes the necessary security authentication with the vehicle, the digital key can be used to perform locking and unlocking operations and near-field communication with the vehicle.

### SUMMARY

The following is a brief summary of subject matter described in detail herein. This summary is not intended to be limiting as to the scope of the claims.

The present disclosure provides a digital key application method, a system, an electronic device, and a computer-readable storage medium.

A digital key application method, applied to a terminal, includes: obtaining protocol information of a digital key protocol of a vehicle and key information of a digital key of the terminal; determining, based on the protocol information of the digital key protocol of the vehicle and device information of the terminal, a target digital key protocol from a plurality of digital key protocols pre-integrated in a software development kit; and interacting with the vehicle based on the key information of the digital key of the terminal and the target digital key protocol.

Optionally, the plurality of digital key protocols include a general protocol and a private protocol, and determining, based on the protocol information of the digital key protocol of the vehicle and the device information of the terminal, the target digital key protocol from the plurality of digital key protocols pre-integrated in the software development kit, includes: determining whether a digital key protocol compatible with the device information of the terminal and the protocol information of the digital key protocol of the vehicle exists in the general protocol; in a case that the digital key protocol compatible with the device information of the terminal and the protocol information of the digital key protocol of the vehicle exists in the general protocol, determining, the digital key protocol compatible with the device information of the terminal and the protocol information of the digital key protocol of the vehicle, as the target digital key protocol; and in a case that the digital key protocol compatible with the device information of the terminal and the protocol information of the digital key protocol of the vehicle does not exist in the general protocol, determining the private protocol as the target digital key protocol, and/or sending a request for updating the general protocol.

Optionally, the plurality of digital key protocols are pre-integrated by: integrating interfaces corresponding to the plurality of digital key protocols based on standards corresponding to the plurality of digital key protocols to obtain an integrated interface; and implementing a preset wireless communication interface based on the integrated interface to implement pre-integration of the plurality of digital key protocols.

Optionally, the method further includes: in response to a preset instruction, performing at least one of adding a digital key protocol, deleting a digital key protocol, or updating a digital key protocol on the plurality of digital key protocols that are pre-integrated.

Optionally, the method further includes at least one of: encrypting the key information of the digital key of the terminal by using a first security unit before interacting with the vehicle based on the key information of the digital key of the terminal and the target digital key protocol; or storing the key information by using a second security unit.

Optionally, after storing the key information by using the second security unit, the method further includes at least one of: when the terminal and/or the vehicle is offline, interacting with the vehicle based on the key information stored in the second security unit and the target digital key protocol; performing identity verification at a preset time interval, and when the identity verification fails, determining that the key information stored in the second security unit is invalid; or performing identity verification when the digital key is used in an offline state, and when the identity verification fails, determining that the key information stored in the second security unit is invalid.

Optionally, when interacting with the vehicle based on the key information of the digital key of the terminal and the target digital key protocol, a time interval from a last identity verification is determined, identity verification is performed in response to the time interval being greater than a preset duration, and it is determined that the key information stored in the second security unit is invalid when the identity verification fails.

The present disclosure further provides a digital key application method, applied to a server, the method including: in response to a key acquisition request, sending protocol information of a digital key protocol of a vehicle and key information of a digital key of a terminal to the terminal, so that the terminal determines, based on the protocol information of the digital key protocol of the vehicle and device information of the terminal, a target digital key protocol from a plurality of digital key protocols pre-integrated in a software development kit, and interacts with the vehicle based on the target digital key protocol and the key information of the digital key of the terminal.

Optionally, the method further includes: obtaining a vehicle parameter of the vehicle; and sending key information of a digital key of the vehicle to the vehicle based on the vehicle parameter.

Optionally, after sending the key information of the digital key of the terminal to the terminal and/or sending the key information of the digital key of the vehicle to the vehicle, the method further includes at least one of: sending a newly added digital key protocol and/or an updated digital key protocol to the terminal, so that the terminal performs at least one of adding a digital key protocol, deleting a digital key protocol, or updating a digital key protocol on the plurality of digital key protocols that are pre-integrated; or sending an identity verification instruction to the terminal and/or the vehicle at a preset time interval, and determining that the key information associated with the terminal and/or the vehicle is invalid when identity verification fails.

Optionally, when the terminal and/or the vehicle is offline, in response to a duration during which the terminal and/or the vehicle is offline exceeding a preset duration: the time interval for sending the identity verification instruction to the terminal and/or the vehicle is shortened.

Optionally, when the terminal and/or the vehicle is offline, in response to a duration during which the terminal and/or the vehicle is offline exceeding a preset duration: when the vehicle is first detected to be online while the terminal remains offline, the identity verification instruction is sent to the vehicle, and information related to verification of the digital key of the terminal is deleted from the vehicle after the identity verification succeeds.

The present disclosure further provides a digital key system, including a terminal, a vehicle, and a server; where the server is configured to send protocol information of a digital key protocol of the vehicle and key information of a digital key of the terminal to the terminal, and send key information of a digital key of the vehicle to the vehicle; the terminal is configured to determine a target digital key protocol from a plurality of digital key protocols pre-integrated in a software development kit based on the protocol information of the digital key protocol of the vehicle and device information of the terminal, and interact with the vehicle based on the target digital key protocol and the key information of the digital key of the terminal; and the vehicle is configured to interact with the terminal based on the key information of the digital key of the vehicle and the protocol information of the digital key protocol of the vehicle.

The present disclosure further provides an electronic device, including: at least one memory and at least one processor, where the at least one memory stores an application program that, when executed by the at least one processor, causes the at least one processor to perform the digital key application method as described above.

The present application further provides a computer-readable storage medium, where the computer-readable storage medium stores a computer program that, when executed by at least one processor, causes the at least one processor to perform the digital key application method as described above.

Other aspects will be apparent upon reading and understanding the drawings and detailed description.

### BRIEF DESCRIPTION OF DRAWINGS

The accompanying drawings, which are incorporated in and constitute a part of this description, illustrate embodiments consistent with the present disclosure and, together with the description, serve to explain the principles of the present disclosure. To describe the technical solutions in the embodiments of the present disclosure more clearly, the drawings required in the description of the embodiments will be briefly described below. It will be understood by those of ordinary skill in the art that other drawings can be obtained based on these drawings without any creative work.
FIG. 1 is an architectural diagram of a digital key system according to an embodiment of the present disclosure.
FIG. 2 is a schematic flowchart of a digital key application method according to an embodiment of the present disclosure.

The implementation of objects, functional features and advantages of the present disclosure will be further described with reference to the embodiments and the accompanying drawings. Illustrative embodiments of the present disclosure are shown in the above drawings, and will be described in more detail below. These drawings and descriptions are not intended to limit the scope of the concept of the present disclosure in any way, but are intended to describe the concept of the present disclosure for those skilled in the art by reference to specific embodiments.

### DETAILED DESCRIPTION

Illustrative embodiments, examples of which are illustrated in the accompanying drawings, will be described in detail herein. In the following description with respect to the drawings, like reference numerals in different drawings indicate the same or similar elements, unless otherwise indicated. The implementations described in the following illustrative embodiments do not represent all implementations consistent with the present disclosure. Rather, they are merely examples of devices and methods consistent with some aspects of the present disclosure as recited in the appended claims.

It should be noted that, in this description, the terms "include", "comprise", or any other variants thereof are intended to cover non-exclusive inclusion, so that a process, method, article, or apparatus that includes a series of elements includes not only those elements, but also other elements that are not explicitly listed, or elements inherent to such a process, method, article, or apparatus. In the absence of more limitations, an element defined by the phrase "including/comprising a/an ..." does not exclude the existence of additional identical elements in the process, method, article or apparatus including the element, and/or the components, features or elements with the same name in different embodiments of the present disclosure may have the same meaning or different meanings, and the specific meaning thereof needs to be determined by its explanation in the specific embodiment or further in combination with the context in the specific embodiment.

It should be understood that although the terms such as "first", "second", "third", etc. may be used herein to describe various information, such information should not be limited by these terms. These terms are used only to distinguish information of the same type from each other. For example, without departing from the scope of this description, first information may also be referred to as second information, and similarly, second information may also be referred to as first information. Depending on the context, the term "if" as used herein may be interpreted as "when..." or "upon..." or "in response to determining". Also, as used herein, the singular forms "a", "an" and "the" are intended to include the plural forms as well, unless clearly indicated otherwise in the context. It should be further understood that the terms "comprises/includes" and/or "comprising/including" specify the presence of stated features, steps, operations, elements, components, items, kinds, and/or groups, but do not preclude the presence or addition of one or more other features, steps, operations, elements, components, items, kinds, and/or groups thereof. As used herein, the terms "or," "and/or," "comprising/including at least one of following" and the like may be construed as inclusive or meaning any one or any combination. For example, "comprising/including at least one of the following: A, B, C" means "any of the following: A; B; C; A and B; A and C; B and C; A, B and C", and for another example, "A, B, or C" or "A, B, and/or C" means "any of the following: A; B; C; A and B; A and C; B and C; A, B and C". An exception to this definition will occur only when a combination of elements, functions, steps or operations is inherently mutually exclusive in some way.

It should be understood that although the steps in the flowcharts in the embodiments of the present disclosure are shown in sequence as indicated by arrows, these steps are not necessarily sequentially performed in an order indicated by the arrows. Unless explicitly stated herein, the execution of these steps is not strictly limited to a specific order, and may be performed in other orders. Moreover, at least some of the steps in the figure may include multiple sub-steps or multiple stages, and these sub-steps or stages are not necessarily performed and completed at the same time, but may be performed at different times. Their execution order is not necessarily sequential, but may be performed in turn or alternately with other steps or at least some of the sub-steps or stages of other steps.

Depending on the context, the phrases "if ..." and "in the case of/that ..." as used herein may be interpreted as "when ..." or "upon ..." or "in response to determining" or "in response to detecting". Similarly, depending on the context, the phrases "if it is determined" or "if it is detected (a stated condition or event)" may be interpreted as "when it is determined ..." or "in response to determining" or "when it is detected (a stated condition or event)" or "in response to detecting (a stated condition or event)".

It should be noted that, in this description, step designations such as S1, S2, etc., are used for the purpose of describing corresponding content more clearly and briefly, and do not constitute a substantial limitation on the order. During specific implementation, a person skilled in the art may first perform S2 and then perform S1, but these should fall within the protection scope of the present disclosure.

It should be understood that the specific embodiments described herein are only used to explain the present disclosure and are not intended to limit the present disclosure.

In the following description, terms such as "module", "component" or "unit" used to represent elements are only used to facilitate the description of the present disclosure, and have no specific meaning in themselves. Therefore, "module", "component" or "unit" may be used interchangeably.

Currently, digital keys may be implemented based on different types of digital key standards, and common digital key standards in the market include the Car Connectivity Consortium (CCC), the Intelligent Car Connectivity Industry Ecosystem (ICCE), the Intelligent Car Connectivity Open Alliance (ICCOA), as well as private standards developed by various manufacturers. However, these digital key standards are not unified, and terminal brands and vehicle brands covered by different digital key standards are inconsistent, resulting in a case where the incompatibility issues of the digital key standard often arise when the digital key function of the terminal is used, thereby affecting the user experience.

In view of this, embodiments of the present disclosure provide a digital key application method, a system, an electronic device, and a storage medium.

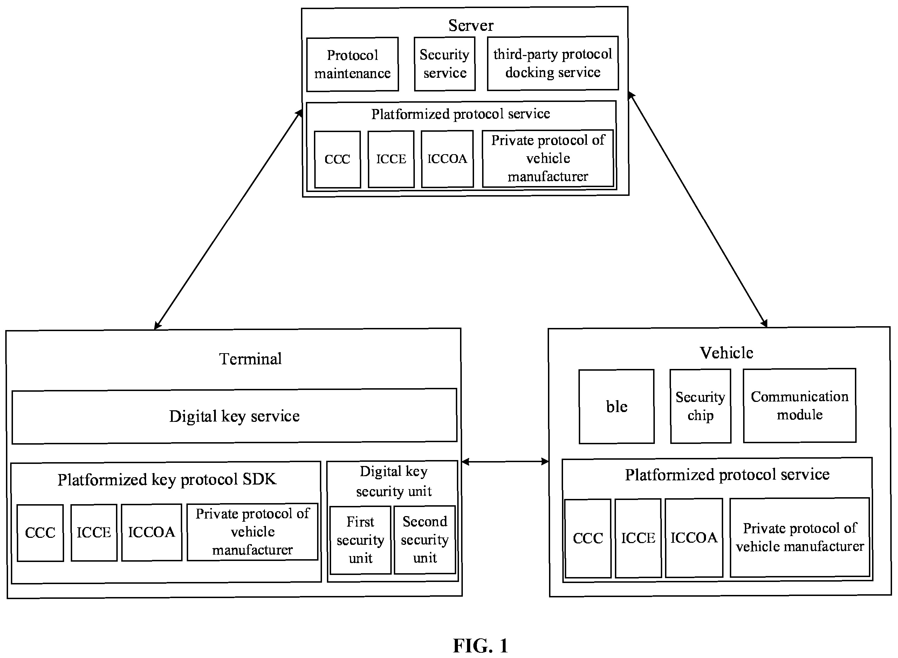

As shown in FIG. 1, a digital key system of the present disclosure includes a terminal, a vehicle and a server.

The server is configured to send protocol information of a digital key protocol of a vehicle and key information of a digital key of the terminal to the terminal, and send key information of a digital key of the vehicle to the vehicle.

The terminal is configured to determine a target digital key protocol from a plurality of digital key protocols pre-integrated in a software development kit based on the protocol information of the digital key protocol of the vehicle and device information of the terminal, and interact with the vehicle based on the target digital key protocol and the key information of the digital key of the terminal.

The vehicle is configured to interact with the terminal based on the protocol information of the digital key protocol of the vehicle and the key information of the digital key of the vehicle.

In an embodiment according to the present disclosure, the protocol information of the digital key protocol of the vehicle refers to protocol information of a digital key protocol used on the vehicle. A software development kit (SDK) is used to implement platformization of key protocols, features plug-in characteristics, and can be rapidly integrated into the terminal. With the software development kit, a plurality of digital key protocols can be integrated in the terminal, and then a compatible digital key protocol can be selected based on the protocol information of the digital key protocol used by the vehicle and the device information of the terminal, which is better compatible with different terminal models and vehicle models and improves the user experience. At the same time, integrating a plurality of digital key protocols in the terminal using the software development kit eliminates the need for compatibility design of the digital key on the vehicle, and after receiving the digital key, the vehicle can use the digital key by simply implementing the corresponding digital key protocol as originally planned, which shortens the development cycle and reduces the design cost.

Optionally, the device information of the terminal includes at least one of a brand, a model, or an implemented protocol of the terminal. The protocol information of the digital key protocol includes a name or a type of the protocol, for example, the name is CCC, and the type is a general protocol, or a private protocol, etc. The general protocols include a protocol that is not developed by the vehicle manufacturer, such as CCC, ICCE, ICCOA, etc., and the private protocols refer to those developed by the vehicle manufacturer. The digital key includes a digital key of the terminal and a digital key of the vehicle, the digital key of the terminal and the digital key of the vehicle are encrypted by using certificates to ensure security, and the delivery channel is secured by two-way authentication.

Optionally, function upgrades of the software development kit may be performed via an over-the-air technology (OTA) without manually upgrading a terminal application and a device, which is more convenient.

Optionally, there may be one or more servers, including, for example, a server configured to implement a digital key service, a server configured to maintain a plurality of digital key protocols, and a server configured to provide a digital key protocol, or all services related to a digital key are integrated into one server.

The following describes each module in a system architecture of the present disclosure.

### 1. Terminal

A digital key application is installed in the terminal, and the digital key application includes a digital key upper-layer service module, a platformized (platform-based) key protocol SDK, and a digital key security unit. The digital key application is developed and architected in a manner that the SDK and the services are separated from each other, allowing the services or the SDK to be updated independently without affecting the existing services, while the upper-layer service uses dynamic loading.

The digital key upper-layer service module is mainly configured to implement user interface (UI) functions for digital key creation and execution of digital key related instructions, including but not limited to digital key management, digital key issuance, and digital key near-field vehicle control instructions.

The platformized key protocol SDK (i.e., the software development kit) is used for integrating common digital key protocols by means of underlying libraries, and the digital key protocols may include, but are not limited to, CCC, ICCE, ICCOA, and vehicle manufacturer private protocols. On the basis of integrating the digital key protocols, further integration is performed with official BLE 5.0 (Bluetooth Low Energy 5.0) API (Application Programming Interface). The platformized key protocol SDK may be configured to implement three functions of protocol identification, protocol judgment, and protocol determination.

The protocol identification may indicate that the platformized key protocol SDK receives and identifies the protocol information of the digital key protocol implemented by the current vehicle, sent by the server.

The protocol judgment may indicate that the platformized key protocol SDK determines a matching protocol based on the digital key protocol implemented by the vehicle and the system, model and implemented protocol of the current terminal.

The protocol determination may indicate that the platformized key protocol SDK loads the matching protocol into the platformized key protocol SDK and instantiates the matching protocol.

The digital key security unit is configured to securely store the digital key and ensure security of the digital key. The digital key security unit generates an encrypted digital key by using an encryption algorithm and a lookup table technology.

### 2. Server

The server may include a protocol maintenance module, a security service module, a third-party protocol docking service module, and a platformized protocol service module.

The protocol maintenance module is configured to maintain protocol types and protocol issuance and management of different vehicle models.

The security service module is configured for digital key security management and certificate management.

The third-party protocol docking service module is configured to dock with various servers of the general protocols such as CCC, ICCE, ICCOA, etc., and the private protocols of the vehicle manufacturers.

The platformized protocol service module is configured for internal access of APIs for the general protocols such as CCC, ICCE, ICCOA, etc., and the private protocols of the vehicle manufacturers.

### 3. Vehicle

The vehicle may include a BLE module, a security chip, a communication module, and a platformized protocol service module.

The BLE module is a Bluetooth BLE chip module.

The security chip is a data security storage chip and can be used for digital key and certificate security assurance.

The communication module is configured to communicate with the server and the terminal.

The platformized protocol service module is configured for hardware authentication and protocol access of the general protocols such as CCC, ICCE, ICCOA, etc., and the private protocols of the vehicle manufacturers.

The foregoing system integrates the plurality of digital key protocols by using the terminal SDK, to implement platformization of the digital key protocols, so that a compatible digital key protocol can be selected based on the protocol information of the digital key protocol used by the vehicle and device information of the terminal, which is better compatible with different terminal models and vehicle models, and improves user experience. At the same time, there is no need to perform compatible design of the digital key for the vehicle, and after receiving the digital key, the vehicle can use the digital key by simply implementing the corresponding digital key protocol as originally planned, which shortens the development cycle and reduces the design cost.

A method implemented by the above digital key system will be described below.

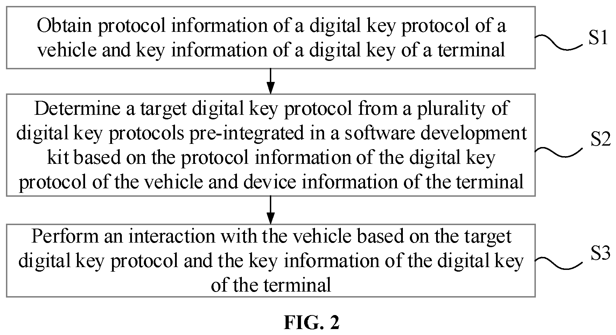

Referring to FIG. 2, a digital key application method, applied to a terminal, includes the following steps S1 to S3.

In step S1, protocol information of a digital key protocol of a vehicle and key information of a digital key of the terminal are obtained.

In step S2, a target digital key protocol is determined from a plurality of digital key protocols pre-integrated in a software development kit based on the protocol information of the digital key protocol of the vehicle and device information of the terminal.

In step S3, interaction with the vehicle is performed based on the target digital key protocol and the key information of the digital key of the terminal.

Optionally, the terminal application (the foregoing digital key application) integrates a plurality of digital key protocols through the software development kit, to implement platformization of digital key protocols. The software development kit forwards a key request to an upper-layer application, and the upper-layer application obtains, from a server through a cloud API interface, protocol information of the digital key protocol implemented by the vehicle bound to the user, for example, a protocol type. The server sends information related to the protocol type of the digital key protocol used by the vehicle and the digital key to the terminal application, and then the terminal application sends the information to the software development kit. The software development kit binds a corresponding digital key protocol based on the protocol type of the digital key protocol used by the vehicle and the device information such as the terminal's brand, model, etc. In this way, if the user changes the vehicle model, the server may re-issue the corresponding digital key and protocol type to the terminal application based on the protocol type corresponding to the vehicle model after the change, thereby binding the corresponding digital key protocol.

In this way, the function of the digital key application can be upgraded in a plug-in manner, which includes but is not limited to, for example, adding a new digital key protocol to the digital key application, the server sends a library file corresponding to the new digital key protocol to the terminal, and the digital key application adds the new digital key protocol to the digital key application in a dynamic loading manner, without requiring the user to update the digital key application.

Optionally, the plurality of digital key protocols that are pre-integrated include a general protocol and a private protocol. Determining the target digital key protocol from the plurality of digital key protocols pre-integrated in the software development kit based on the protocol information of the digital key protocol of the vehicle and the device information of the terminal includes: determining whether a digital key protocol compatible with the device information of the terminal and the protocol information of the digital key protocol of the vehicle exists among the general protocols; if the compatible digital key protocol exists among the general protocols, determining the compatible digital key protocol as the target digital key protocol; and if the compatible digital key protocol does not exist among the general protocols, determining the private protocol as the target digital key protocol, and/or sending a request for updating the general protocols.

In an embodiment of the present disclosure, the general protocols are relatively mature and widely used protocols such as CCC, ICCE, ICCOA, etc., and the compatible digital key protocol is first selected from the general protocols, so that use performance of the terminal can be better ensured and user experience is improved, during the adaptation of the vehicle's protocol. When the compatible general protocol does not exist, a request can be sent to the server to obtain general protocols, so as to update the general protocols integrated in the terminal and then perform adaptation again. If there is still no compatible general protocol after the update, the private protocol of the vehicle manufacturer is determined as the target digital key protocol, thereby at least ensuring the use of the digital key. Alternatively, when it is determined for the first time that no compatible general protocol exists, it may be determined that the private protocol of the vehicle manufacturer is the target digital key protocol. In practice, when digital key adaptation is performed, if it is determined for the first time that no compatible general protocol exists, it may be determined, based on a network status, a traffic status, and the like of the terminal, whether it is suitable to update the general protocols in the terminal. If it is suitable to update the general protocols in the terminal, the general protocols are updated and the adaptation is restarted. If it is not suitable to update the general protocols in the terminal, the private protocol of the vehicle manufacturer is selected, and when it is suitable to update the general protocols, the user is prompted whether to update the general protocols, so as to rebind the more suitable digital key protocol.

Optionally, the plurality of digital key protocols are integrated in the following manner: integrating interfaces corresponding to the plurality of digital key protocols based on standards corresponding to the plurality of digital key protocols to obtain an integrated interface; and implementing a preset wireless communication interface based on the integrated interface, so as to implement integration of the plurality of digital key protocols.

In an embodiment of the present disclosure, the CCC, the ICCE, the ICCOA, and the private protocol are all protocol standards implemented based on BLE 5.0, and the CCC, the ICCE, the ICCOA, and the private protocol may all implement the BLE 5.0 interface based on integration of the corresponding interfaces by using their respective protocol standards, thereby implementing a software development kit in which digital key protocols are integrated.

Optionally, the digital key application method further includes: in response to a preset instruction, performing at least one of adding a digital key protocol, deleting a digital key protocol, or updating a digital key protocol on the plurality of pre-integrated digital key protocols.

Optionally, the preset instruction comes from the server or a user operation. The manner of pre-integrating the plurality of digital key protocols in the software development kit has the advantage of plug-in capability, allowing more flexible and convenient addition, deletion or update of the digital key protocols. For example, currently unused digital key protocols may be deleted, new digital key protocols may be added/downloaded, protocol information of digital key protocols may be updated, etc.

Optionally, the digital key application method further includes at least one of the following: encrypting the key information of the digital key of the terminal by using a first security unit before interacting with the vehicle based on the target digital key protocol and the key information of the digital key of the terminal; or storing the key information by using a second security unit.

In an embodiment of the present disclosure, the first security unit and the second security unit may be packaged in the digital key security unit shown in FIG. 1, or may be two independent units.

Optionally, after the key information is stored by using the second security unit, the digital key application method further includes at least one of the following: when the terminal and/or the vehicle is offline, interacting with the vehicle based on the key information stored in the second security unit and the target digital key protocol; performing identity verification at a preset time interval, and when the identity verification fails, determining that the key information stored in the second security unit is invalid; or performing identity verification when the digital key is used in an offline state, and when the identity verification fails, determining that the key information stored in the second security unit is invalid.

In an embodiment of the present disclosure, after the key information is stored by using the second security unit, when the terminal and/or the vehicle is offline, interaction with the vehicle can also be performed based on the key information stored in the second security unit and the target digital key protocol. The use of the digital key cannot be affected in areas with poor signals such as garages, or under data usage restrictions.

After storing the key information by using the second security unit, identity verification is performed at a preset time interval, and when the identity verification fails, it is determined that the key information stored in the second security unit is invalid. In an embodiment of the present disclosure, the identity verification may be one or a combination of fingerprint verification, face verification, or password verification. Thus, security of the vehicle can be ensured when the terminal is lost.

Alternatively, identity verification is performed when the digital key is used in the offline state, and when the identity verification fails, it is determined that the key information stored in the second security unit is invalid. In this manner, when the server cannot monitor the security of the digital key, verification may be performed by using locally stored identity verification information, thereby ensuring security of the vehicle.

In practice, it is also possible that when the terminal is connected to the vehicle to perform key verification, it may be determined whether a time interval from last identity verification exceeds a preset duration. If so, identity verification is performed, and when the identity verification fails, it is determined that the key information stored in the second security unit is invalid. Alternatively, a function of deleting the digital key information is provided on the vehicle, and when identity verification information is entered on the vehicle and verification succeeds, information related to the verification of the selected digital key of the terminal is deleted from the vehicle, so that the digital key of the terminal fails to be verified, thereby achieving the purpose of invalidating the digital key of the terminal.

An interaction process between the terminal and the vehicle may include Bluetooth connection, authentication, and communication.

Bluetooth connection: the terminal application is connected with the vehicle through Bluetooth; to improve the connection efficiency, the connection rule is as follows: the last four digits of the VIN (Vehicle Identification Number) code of the vehicle are set as the last four digits of the Bluetooth MAC (Media Access Control) address of the vehicle, the terminal can quickly find the corresponding Bluetooth device through the last four digits of the VIN code of the vehicle during scanning, and the Bluetooth connection is performed after finding the Bluetooth device.

Authentication: authentication is performed after the Bluetooth connection is successfully established; the authentication is performed by using a certificate transmitted by the terminal; and if the certificate transmitted by the terminal is authenticated successfully, a subsequent service continues to be performed, and if the authentication fails, the current service is suspended.

Communication: after authentication succeeds, a secure interaction channel is successfully established, and a digital key-related service operation may be performed, including but not limited to unlocking a vehicle door, closing a vehicle door, opening/closing a vehicle window and a tailgate, and the like, without a network.

As described above, the digital key application method according to the embodiment of the present application, applied to a terminal, includes the following steps: obtaining protocol information of a digital key protocol of a vehicle and key information of a digital key of the terminal; determining a target digital key protocol from a plurality of digital key protocols pre-integrated in a software development kit based on the protocol information of the digital key protocol of the vehicle and device information of the terminal; and interacting with the vehicle based on the target digital key protocol and the key information of the digital key of the terminal. In the technical solution of the present disclosure, the plurality of digital key protocols are integrated in the terminal by using the software development kit, and a compatible digital key protocol may be selected based on the protocol information of the digital key protocol used by the vehicle and the device information of the terminal, which is better compatible with different terminal models and vehicle models and improves the user experience.

The present disclosure further provides a digital key application method, which is applied to a server, and the method includes: in response to a key acquisition request, sending protocol information of a digital key protocol of a vehicle and key information of a digital key of a terminal to the terminal, enabling the terminal to determine a target digital key protocol from a plurality of digital key protocols pre-integrated in a software development kit based on the protocol information of the digital key protocol of the vehicle and the device information of the terminal, and to interact with the vehicle based on the key information of the digital key of the terminal and the target digital key protocol.

In an embodiment of the present disclosure, the server achieves compatibility with different digital key protocols by integrating different digital key protocols and interfacing with different digital key protocol cloud services. After receiving the digital key request from the terminal, the server obtains a protocol corresponding to the vehicle through the vehicle bound to the vehicle owner, and then delivers different digital keys through the security service. At the same time, the server maintains data of different protocols corresponding to different vehicle models.

Optionally, the method further includes: obtaining a vehicle parameter of the vehicle; and sending key information of a digital key of the vehicle to the vehicle based on the vehicle parameter.

In an embodiment according to the present disclosure, after receiving the request from the server, the vehicle returns the vehicle parameter to the server; after receiving the corresponding vehicle parameter, the server delivers the digital key corresponding to the vehicle parameter to the vehicle; after receiving the digital key, the vehicle stores the digital key in the vehicle security chip, and implements the corresponding digital key protocol as originally planned without compatibility adaptation, and different vehicle models may implement different digital key protocols.

Optionally, after sending the key information of the digital key of the terminal to the terminal and/or sending the key information of the digital key of the vehicle to the vehicle, the method further includes at least one of the following: sending a newly added digital key protocol and/or an updated digital key protocol to the terminal, so that the terminal performs at least one of adding a digital key protocol, deleting a digital key protocol, and updating a digital key protocol on a plurality of pre-integrated digital key protocols; or sending an identity verification instruction to the terminal and/or the vehicle at a preset time interval, and when the identity verification fails, determining that the key information associated with the terminal and/or the vehicle is invalid.

In an embodiment of the present disclosure, when a digital key protocol is updated or newly added, the newly added digital key protocol and/or the updated digital key protocol is sent to the terminal to continuously improve the user experience.

An identity verification instruction is sent to the terminal and/or the vehicle at a preset time interval, and when the identity verification fails, it is determined that the key information associated with the terminal and/or the vehicle is invalid, thereby ensuring vehicle security when the terminal is lost. When the terminal and/or the vehicle is offline, the identity verification instruction will fail to be sent, and in this case, if it is determined that the terminal and/or the vehicle has been offline for a continuous period, the sending interval of the identity verification instruction can be shortened to improve the transmission success rate, thereby avoiding missing the transmission window during brief network connections. Alternatively, in the case of continuous offline status, when the vehicle is first detected to be online while the terminal remains offline, an identity verification instruction is sent to the vehicle, and a deletion function of the digital key is triggered when the verification succeeds. At this time, the user is allowed to delete information related to the verification of the selected digital key of the terminal from the vehicle, thereby causing verification failure of the digital key of the terminal and achieving the purpose of invalidating the digital key of the terminal.

As described above, the digital key application method of the embodiment of the present disclosure is applied to a server, and includes the following steps: in response to a key acquisition request, sending protocol information of a digital key protocol of a vehicle and key information of a digital key of a terminal to the terminal, so that the terminal determines a target digital key protocol from multiple digital key protocols pre-integrated in a software development kit based on the protocol information of the digital key protocol of the vehicle and device information of the terminal, and interacts with the vehicle based on the key information of the digital key of the terminal and the target digital key protocol. In the technical solution of the present disclosure, the plurality of digital key protocols are integrated into the terminal by using the software development kit, and a compatible digital key protocol may be selected based on the protocol information of the digital key protocol used on the vehicle and the device information of the terminal, thereby ensuring better compatibility across different terminal models and vehicle models, and improving user experience.

An embodiment of the present disclosure further provides an electronic device, including at least one memory and at least one processor, where the memory stores an application program, and the application program, when executed by the processor, implements the steps of the foregoing digital key application method.

An embodiment of the present disclosure further provides a computer-readable storage medium, where the storage medium stores a computer program, and the computer program, when executed by at least one processor, implements the steps of the foregoing digital key application method.

Embodiments of the electronic device and the computer-readable storage medium provided in the embodiments of the present disclosure may include all technical features of any one of the foregoing device processing method embodiments, and extension and explanation content of the specification are basically the same as those of the foregoing method embodiments, and details are not described herein again.

An embodiment of the present disclosure further provides a computer program product, where the computer program product includes computer program code, and the computer program code, when run on a computer, causes the computer to perform the method in the foregoing possible implementations.

An embodiment of the present disclosure further provides a chip, including at least one memory and at least one processor, where the memory is configured to store a computer program, and the processor is configured to invoke the computer program from the memory and run the computer program, so that a device on which the chip is installed performs the method in the foregoing possible implementations.

It may be understood that the foregoing scenarios are merely examples, and do not constitute a limitation on application scenarios of the technical solutions provided in embodiments of the present disclosure. For example, a person of ordinary skill in the art may learn that, with evolution of a system architecture and emergence of a new service scenario, the technical solutions provided in embodiments of the present disclosure are also applicable to a similar technical problem.

The foregoing sequence numbers of the embodiments of the present disclosure are merely for description, and do not represent advantages and disadvantages of the embodiments.

The steps in the method embodiments of the present disclosure may be sequentially adjusted, combined, and deleted based on an actual requirement.

The units in the device embodiments of the present disclosure may be combined, divided, and deleted based on an actual requirement.

In the present disclosure, the descriptions of the same or similar term concepts, technical solutions, and/or application scenarios are generally described in detail only when they appear for the first time, and when they appear later, for brevity, repeated descriptions are generally omitted. When understanding the technical solutions, etc., of the present disclosure, for the same or similar term concepts, technical solutions, and/or application scenarios that are not described in detail later, reference may be made to previous detailed descriptions thereof.

In the present disclosure, the description of each embodiment has its own focus. For parts that are not described or recorded in a certain embodiment, reference may be made to the relevant description of other embodiments.

The technical features of the technical solutions of the present disclosure may be combined arbitrarily, and in order to simplify the description, all possible combinations of the technical features in the above embodiments are not described. However, as long as there is no contradiction in these combinations of technical features, they should be considered as falling within the scope of the present disclosure.

Through the description of the above embodiments, those skilled in the art can clearly understand that the above method embodiments can be implemented by means of software combined with a necessary general hardware platform, however, the above method embodiments can also be implemented by hardware. In many cases, the former is a better implementation. Based on such understanding, the technical solutions of the present disclosure essentially or the part contributing to the prior art may be embodied in the form of a software product, which is stored in a storage medium (such as ROM/RAM, magnetic disk, optical disk) as described above, and includes several instructions for causing a terminal device (such as a mobile phone, a computer, a server, a controlled terminal, or a network device, etc.) to execute the method of each embodiment of the present disclosure.

In the above embodiments, all or parts of the foregoing embodiments may be implemented by using software, hardware, firmware, or any combination thereof. When implemented by software, all or parts of the embodiments may be implemented in a form of a computer program product. The computer program product includes one or more computer instructions. When the computer instructions are loaded and executed on a computer, all or parts of the procedures or functions according to embodiments of the present disclosure are generated. The computer may be a general-purpose computer, a special-purpose computer, a computer network, or other programmable devices. The computer instructions may be stored in a computer-readable storage medium or transmitted from one computer-readable storage medium to another. For example, the computer instructions may be transmitted from a website, computer, server, or data center to another website, computer, server, or data center in a wired (e.g., a coaxial cable, an optical fiber, or a digital subscriber line) or wireless (e.g., infrared, radio, or microwave) manner. The computer-readable storage medium may be any usable medium accessible by a computer, or a data storage device, such as a server or a data center, integrating one or more usable media. The usable medium may be a magnetic medium (e.g., a floppy disk, a storage disk, or a magnetic tape), an optical medium (e.g., a DVD), a semiconductor medium (e.g., a Solid State Disk (SSD)), etc.

The foregoing descriptions are merely some embodiments of the present disclosure, and are not intended to limit the protection scope of the present disclosure. Any equivalent structure or equivalent process transformation made by using the content of the specification and the accompanying drawings of the present disclosure, or directly or indirectly application in other related technical fields, is also included in the protection scope of the present disclosure.

## Claims

1. A digital key application method, applied to a terminal and comprising:
obtaining protocol information of a digital key protocol of a vehicle and key information of a digital key of the terminal;
determining, based on the protocol information of the digital key protocol of the vehicle and device information of the terminal, a target digital key protocol from a plurality of digital key protocols pre-integrated in a software development kit; and
interacting with the vehicle based on the key information of the digital key of the terminal and the target digital key protocol.

2. The method according to claim 1, wherein the plurality of digital key protocols comprise a general protocol and a private protocol, and determining, based on the protocol information of the digital key protocol of the vehicle and the device information of the terminal, the target digital key protocol from the plurality of digital key protocols pre-integrated in the software development kit, comprises:
determining whether a digital key protocol compatible with the device information of the terminal and the protocol information of the digital key protocol of the vehicle exists in the general protocol;
in a case that the digital key protocol compatible with the device information of the terminal and the protocol information of the digital key protocol of the vehicle exists in the general protocol, determining, the digital key protocol compatible with the device information of the terminal and the protocol information of the digital key protocol of the vehicle, as the target digital key protocol; and
in a case that the digital key protocol compatible with the device information of the terminal and the protocol information of the digital key protocol of the vehicle does not exist in the general protocol, determining the private protocol as the target digital key protocol, and/or sending a request for updating the general protocol.

3. The method according to claim 1, wherein the plurality of digital key protocols are pre-integrated by:
integrating interfaces corresponding to the plurality of digital key protocols based on standards corresponding to the plurality of digital key protocols to obtain an integrated interface; and
implementing a preset wireless communication interface based on the integrated interface to implement pre-integration of the plurality of digital key protocols.

4. The method according to claim 3, further comprising:
in response to a preset instruction, performing at least one of adding a digital key protocol, deleting a digital key protocol, or updating a digital key protocol on the plurality of digital key protocols that are pre-integrated.

5. The method according to claim 1, further comprising at least one of:
encrypting the key information of the digital key of the terminal by using a first security unit before interacting with the vehicle based on the key information of the digital key of the terminal and the target digital key protocol; or
storing the key information by using a second security unit.

6. The method according to claim 5, wherein after storing the key information by using the second security unit, the method further comprises at least one of:
when the terminal and/or the vehicle is offline, interacting with the vehicle based on the key information stored in the second security unit and the target digital key protocol;
performing identity verification at a preset time interval, and when the identity verification fails, determining that the key information stored in the second security unit is invalid; or
performing identity verification when the digital key is used in an offline state, and when the identity verification fails, determining that the key information stored in the second security unit is invalid.

7. The method according to claim 5, wherein when interacting with the vehicle based on the key information of the digital key of the terminal and the target digital key protocol, a time interval from a last identity verification is determined, identity verification is performed in response to the time interval being greater than a preset duration, and it is determined that the key information stored in the second security unit is invalid when the identity verification fails.

8. A digital key application method, applied to a server, and comprising:
in response to a key acquisition request, sending protocol information of a digital key protocol of a vehicle and key information of a digital key of a terminal to the terminal, so that the terminal determines, based on the protocol information of the digital key protocol of the vehicle and device information of the terminal, a target digital key protocol from a plurality of digital key protocols pre-integrated in a software development kit, and interacts with the vehicle based on the target digital key protocol and the key information of the digital key of the terminal.

9. The method according to claim 8, further comprising:
obtaining a vehicle parameter of the vehicle; and
sending key information of a digital key of the vehicle to the vehicle based on the vehicle parameter.

10. The method according to claim 9, wherein after sending the key information of the digital key of the terminal to the terminal and/or sending the key information of the digital key of the vehicle to the vehicle, the method further comprises at least one of:
sending a newly added digital key protocol and/or an updated digital key protocol to the terminal, so that the terminal performs at least one of adding a digital key protocol, deleting a digital key protocol, or updating a digital key protocol on the plurality of digital key protocols that are pre-integrated; or
sending an identity verification instruction to the terminal and/or the vehicle at a preset time interval, and determining that the key information associated with the terminal and/or the vehicle is invalid when identity verification fails.

11. The method according to claim 10, wherein
when the terminal and/or the vehicle is offline, in response to a duration during which the terminal and/or the vehicle is offline exceeding a preset duration:
the time interval for sending the identity verification instruction to the terminal and/or the vehicle is shortened.

12. The method according to claim 10 or 11, wherein
when the terminal and/or the vehicle is offline, in response to a duration during which the terminal and/or the vehicle is offline exceeding a preset duration:
when the vehicle is first detected to be online while the terminal remains offline, the identity verification instruction is sent to the vehicle, and information related to verification of the digital key of the terminal is deleted from the vehicle after the identity verification succeeds.

13. A digital key system, comprising a terminal, a vehicle, and a server, wherein:
the server is configured to send protocol information of a digital key protocol of the vehicle and key information of a digital key of the terminal to the terminal, and send key information of a digital key of the vehicle to the vehicle;
the terminal is configured to determine a target digital key protocol from a plurality of digital key protocols pre-integrated in a software development kit based on the protocol information of the digital key protocol of the vehicle and device information of the terminal, and interact with the vehicle based on the target digital key protocol and the key information of the digital key of the terminal; and
the vehicle is configured to interact with the terminal based on the key information of the digital key of the vehicle and the protocol information of the digital key protocol of the vehicle.

14. An electronic device, comprising:
at least one memory and at least one processor,
wherein the at least one memory stores an application program that, when executed by the at least one processor, causes the at least one processor to perform the digital key application method according to any one of claims 1 to 12.

15. A computer-readable storage medium, wherein the computer-readable storage medium stores a computer program that, when executed by at least one processor, causes the at least one processor to perform the digital key application method according to any one of claims 1 to 12.
